# DEMANDE DE BREVET EUROPEEN

(11) **EP 2 325 144 A1**
(43) Date de publication de la demande: **25.05.2011**
(21) Numéro de dépôt: 10187558.1
(22) Date de dépôt: 14.10.2010
(51) Int. Cl.: C02F 1/00, C02F 1/467, C02F 103/42

(54) **DISPOSITIF ET PROCÉDÉ DE TRAITEMENT D'EAU DE BASSIN OU PISCINE À PARTIR D'UN DERIVÉ HALOGÉNÉ**

(30) Priorité: 20.10.2009 FR 0905040
(71) Demandeur: Pacific Industrie, 24750 Boulazac (FR)
(72) Inventeur: Stadnicki, Zbigniew, 24150, CALES (FR)
(74) Mandataire: Parzy, Benjamin Alain

(57) **Abrégé**

La présente invention concerne un dispositif de traitement au moyen d'un dérivé halogéné d'une eau de bassin, notamment de piscine, le dispositif de traitement comportant des moyens de production (6) par électrolyse dudit dérivé halogéné à partir d'une solution aqueuse comportant un sel halogéné, et des moyens de mesure (3) de la concentration en dérivé halogéné dans le bassin, le dispositif de traitement étant **caractérisé en ce qu**'il comporte :
- des moyens de régulation (7) de la production du dérivé halogéné permettant de varier la vitesse et la durée de production du dérivé halogéné,
- des moyens de traitement (8) de données obtenues par les moyens de mesure permettant de commander aux moyens de régulation un profil de régulation des vitesses et durées de production du dérivé halogéné en fonction de sa concentration dans le bassin.

## Description

La présente invention concerne un dispositif de traitement d'une eau de bassin et notamment de piscine à partir d'un dérivé halogéné ainsi qu'un procédé de mise en oeuvre associé.

L'invention trouvera avantageusement application dans le domaine du traitement des eaux de piscine résidentielle. Toutefois bien que particulièrement prévue pour cette application, la présente demande s'appliquera également à d'autres types de bassin, tels que des piscines collectives ou encore, de manière générale, des bassins dont les eaux sont traitées par des moyens électrolytiques.

### ARRIERE PLAN DE L'INVENTION

Pour éviter la prolifération de bactéries on utilise pour le traitement des eaux de baignade des agents désinfectants généralement à base de dérivés halogénés et principalement des dérivés de chlore tels que l'hypochlorite de sodium.

Ces dérivés de chlore peuvent être fabriqués sur place, et on connaît, à cet effet, des électrolyseurs permettant de produire la quantité nécessaire d'agent désinfectant à partir de solution aqueuse d'halogénure de sel généralement de sodium.

Le procédé de traitement par électrolyse est simple, il consiste à appliquer une tension relativement élevée aux bornes d'un électrolyseur, placé dans le conduit d'arrivée d'eau ou de recyclage du bassin, de manière à produire une grande quantité d'agent désinfectant nécessaire au traitement.

Ce procédé de traitement est fiable et avantageux, notamment, par rapport aux solutions dans lesquelles la désinfection est réalisée par des pastilles de chlore ce procédé permet de réduire les problématiques liées au transport au stockage et à la conservation des agents désinfectants.

Ce procédé comporte cependant des inconvénients parmi lesquels le fait que l'électrolyseur, qui fonctionne en tout ou rien, consomme beaucoup d'énergie et a une durée de vie, compte tenu de son utilisation par à-coup, réduite.

Par ailleurs le dosage de l'eau du bassin, équipé d'un ou de plusieurs électrolyseurs, n'est pas non plus optimal puisque la quantité d'agents désinfectants produite dans le bassin est généralement trop élevée afin de pas risquer de passer sous un seuil de concentration minimal en agents désinfectants.

Dans ce type de procédé on ne réalise en effet pas de réglage fin compte tenu du fait que la concentration en agents désinfectants peut varier rapidement en fonction de nombreux paramètres et que le fonctionnement de l'électrolyseur ne permet pas de s'adapter à cette variation rapide. En d'autres termes de manière pragmatique l'électrolyseur est programmé par l'installateur pour produire une quantité journalière constante d'agents désinfectants ce qui se traduit par le fait que les électrolyseurs ne sont pas complètement satisfaisants sur le plan de la qualité des eaux de piscine qu'ils procurent et présentent en outre un coût de maintenance et de fonctionnement élevé.

### OBJET DE L'INVENTION

La présente invention a pour but de proposer un perfectionnement aux dispositifs et procédés connus de traitement par électrolyse permettant de pallier aux inconvénients précités.

### RESUME DE L'INVENTION

A cet effet l'invention concerne un dispositif de traitement au moyen d'un dérivé halogéné d'une eau de bassin, notamment de piscine, le dispositif de traitement comportant des moyens de production par électrolyse dudit dérivé halogéné à partir d'une solution aqueuse comportant un sel halogéné, et des moyens de mesure de la concentration en dérivé halogéné dans le bassin, le dispositif de traitement étant caractérisé en ce qu'il comporte :
- des moyens de régulation de la production du dérivé halogéné permettant de varier la vitesse et la durée de production du dérivé halogéné,
- des moyens de traitement de données obtenues par les moyens de mesure permettant de commander aux moyens de régulation un profil de régulation des vitesses et durées de production du dérivé halogéné en fonction de la concentration du dérivé halogéné dans le bassin.

L'invention vise également un procédé associé dans lequel on réalise : une étape de mesure de la concentration du dérivé halogéné, une étape de traitement permettant la commande d'un profil de vitesses et de durées de production du dérivé halogéné et une étape de production du dérivé halogéné selon le profil commandé.

### BREVE DESCRIPTION DES DESSINS

La présente invention sera mieux comprise à la lecture d'un exemple détaillé de réalisation en référence aux dessins annexés, fournis à titre d'exemple non limitatif, parmi lesquels :
- la figure 1 représente un exemple de réalisation des différentes étapes de réalisation du procédé conforme à l'invention,

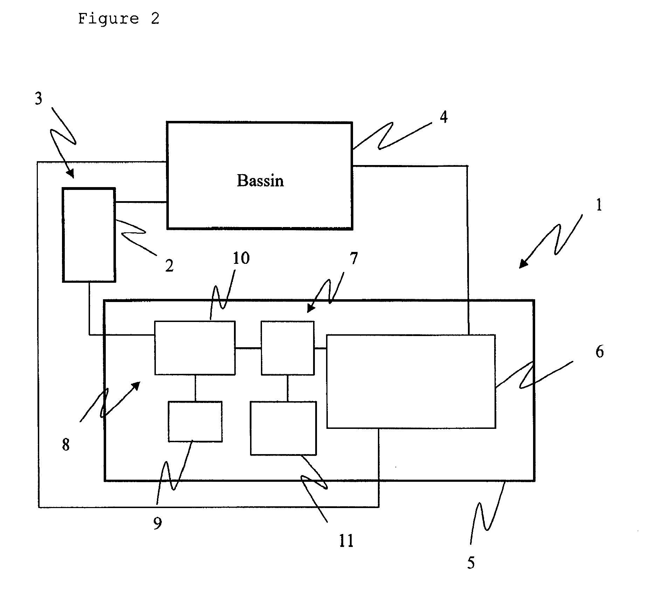

- La figure 2 représente un exemple schématique de réalisation du dispositif de traitement selon l'invention.

### DESCRIPTION DETAILLEE DE L'INVENTION

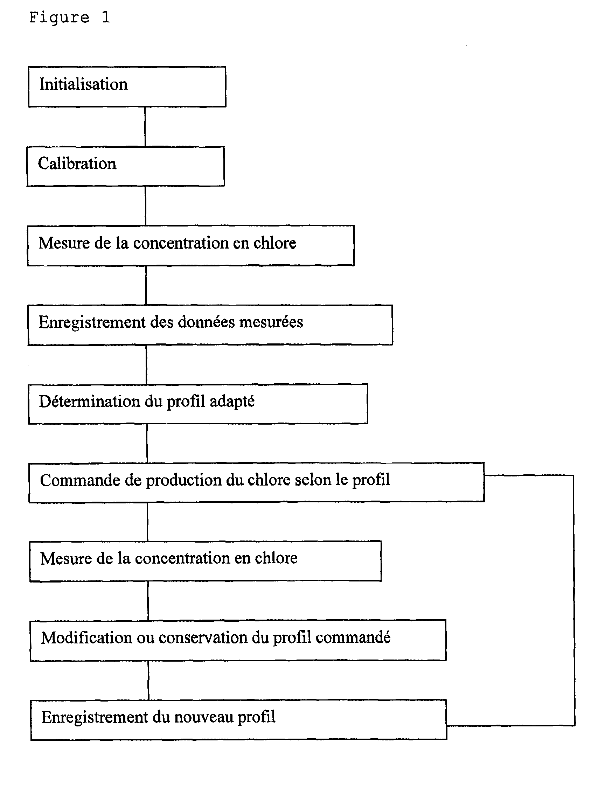

En se reportant principalement à la figure 1 on voit représenté un dispositif de traitement 1. Ce dispositif de traitement 1 comporte dans l'exemple deux parties à savoir une première partie 2 comprenant des moyens de mesure 3 de la concentration en chlore d'un bassin 4.

Le dispositif 1 comprend en outre une seconde partie 5 regroupant des moyens de production 6 par électrolyse dudit dérivé halogéné, à partir d'une solution aqueuse ainsi que des moyens de régulation 7 de la production du dérivé halogéné et des moyens de traitement de données 8.

L'intégration des moyens de production 6 de régulation 7 et de traitement 8 dans un même boîtier est avantageuse notamment en termes de coûts de fabrication. Toutefois, dans d'autres modes de réalisation, les moyens de production 6 pourront être séparés des moyens de régulation 7 et de traitement 8.

A titre d'exemple dans le cas du traitement de l'eau d'un bassin nécessitant plusieurs électrolyseurs, le dispositif 1 comprendra avantageusement dans un boîtier des moyens de régulation 7 et de traitement 8 permettant la commande centralisée à distance des électrolyseurs.

Les moyens de mesure de la concentration sont choisis pour assurer une mesure fiable et automatique de la concentration en chlore, à cet effet les moyens de mesure de l'exemple de réalisation sont de type colorimétrique. Ce type de mesure permet d'obtenir une mesure précise de la concentration en chlore en faisant réagir l'eau à analyser avec un réactif et en mesurant par un analyseur optique la transparence du mélange.

Selon l'invention les moyens de régulation 7 permettent de varier la vitesse et la durée de production du dérivé halogéné. A cet effet selon un mode de réalisation préféré, les moyens de régulation 7 comportent des moyens de variation de la tension appliquée aux électrodes de l'électrolyseur.

La production de dérivé de chlore est directement liée au courant transmis entre les électrodes de l'électrolyseur, par conséquent, une variation du courant permet de varier la vitesse de production du chlore. Ces moyens de variation seront réalisés avantageusement par un potentiomètre numérique.

En fonction des caractéristiques de l'électrolyseur on prévoit que les moyens de régulation 7 permettent une variation de 0 à 20 ampères du courant aux bornes de l'électrolyseur. La variation de courant s'effectue également avantageusement avec un pas de 0.5 ampère. Les moyens de régulation 7 sont reliés à l'alimentation 11 du dispositif 1.

Selon l'invention, les moyens de traitements 8 permettant de commander aux moyens de régulation 7 un profil de régulation des vitesses et durées de production du dérivé en fonction de la concentration du dérivé halogéné dans le bassin.

L'utilisation d'un profil de régulation de la production de chlore est particulièrement intéressant, tout d'abord au niveau du dispositif de traitement 1 le suivi d'un profil permet en effet de faire fonctionner l'électrolyseur successivement à des régimes bas, moyen et élevé et non pas comme dans l'état de la technique constamment en tout ou rien.

Cette modulation permet ainsi de limiter la consommation d'énergie du dispositif et ménage également l'électrolyseur lui même dont les pièces sont moins sujettes à une usure prématurée.

Par ailleurs l'utilisation d'un profil permet de diffuser de manière plus lissée les dérivés chlorés dans le bassin et évite ainsi les pics de concentration en chlore ou à l'inverse un risque de sous dosage en chlore du à une absence de production de chlore durant une période où la quantité de dérivés chlorés baisse rapidement par exemple lorsque la température du bassin augmente rapidement ou lorsque le nombre d'occupants du bassin augmente rapidement.

Une régulation par profil permet par conséquent de s'adapter finement à la quantité de désinfectant nécessaire et par conséquent permet également de réduire la quantité consommé de solution aqueuse de chlorure de sodium.

Pour permettre la détermination du profil adapté les moyens de traitement 8 utilisent les données transmises par les moyens de mesure 3, et compare les mesures à des profils de régulation stockés dans une mémoire 9 par un processeur 10.

Cette mémoire 9 permet le stockage d'au moins un profil de régulation pour différentes concentrations du dérivé halogéné permettant la sélection d'un profil adapté aux données obtenues par les moyens de mesure 3.

Selon une caractéristique avantageuse les moyens de traitement 8 permettent l'analyse et le stockage dans la mémoire 9 d'au moins un paramètre supplémentaire relatif à l'eau du bassin. Différents paramètres peuvent être enregistrés tels que l'évolution de la concentration en dérivé halogéné et/ou la température du bassin et/ou le volume d'eau du bassin, permettant de constituer une grande variété de profils de régulation assurant une commande adaptée des moyens de régulation 7.

En prenant l'exemple de la température du bassin comme paramètre supplémentaire, la mémoire 9 comprendra pour une concentration en chlore donnée différents profils de régulation correspondant à des températures de bassin différentes permettant de produire une quantité de chlore à une vitesse et pendant une durée optimale. A cette fin les moyens de traitement 8 sont également reliés à des moyens de mesure de la température.

Comme indiqué plus haut différents paramètres supplémentaires peuvent être envisagés pour améliorer au cours du temps la précision du dosage en chlore du bassin. Dans le cas de certains paramètres tels que la quantité d'eau dans le bassin il est envisageable que la donnée soit entrée directement dans les moyens de traitement 8 par un opérateur à l'aide d'un clavier relié ou intégré aux moyens de traitement 8.

De manière avantageuse, les moyens de traitement 8 enregistrent dans la mémoire 9 les données mesurées permettant la constitution de nouveaux profils de régulation.

Différents profils sont envisageables en fonction principalement de la différence entre la concentration mesurée en chlore et celle requise dans le bassin, toutefois, les profils de régulation avec une phase d'accroissement de la vitesse de production par paliers suivie d'une phase d'accroissement de la durée de production seront privilégiés.

La présente invention a également pour objet un procédé de traitement d'une eau de bassin notamment de piscine à partir de dérivés halogénés pour la mise en oeuvre du dispositif de traitement 1 tel que précité.

En se reportant à la figure 1 on voit un schéma reprenant les différentes phases du procédé dans lequel on réalise : une étape de mesure de la concentration du dérivé halogéné, une étape de traitement permettant la commande d'un profil de vitesses et de durées de production du dérivé halogéné et une étape de production du dérivé halogéné selon le profil commandé.

De manière avantageuse on réalise en outre au moins une étape de mesure supplémentaire et une étape de traitement. De la sorte le dispositif 1 s'adapte aux évolutions du taux de chlore dans le bassin permettant de conserver ou de modifier le profil de production du dérivé halogéné. La mesure supplémentaire est de préférence réalisée un temps d'attente après la dernière injection de chlore dans le bassin de manière à ce que la concentration en chlore soit stabilisée.

Le procédé peut également comprendre une étape d'initialisation et une étape de calibrage réalisées en usine ou in situ. Le procédé de traitement peut également comprendre une étape de régulation du pH du bassin.

D'autres caractéristiques de l'invention auraient également pu être envisagées sans pour autant sortir du cadre de l'invention définie par les revendications ci-après.

Ainsi à titre d'exemple, le dispositif de traitement vient d'être décrit pour un traitement par des dérivés chlorés toutefois l'invention est également applicable pour d'autres types de dérivés halogénés notamment de brome. De même la solution aqueuse de sel n'est pas limitée au chlorure de sodium et d'autres sels par exemple de calcium connus de l'homme du métier sont également envisageables.

Dans l'exemple de réalisation les mesures de concentration sont obtenus par des moyens de mesure par colorimétrie, cela étant, là encore, la présente demande n'est pas limitée à ce type de mesure et la mesure de la concentration pourra être réalisée par d'autres moyens de mesure automatisables.

## Revendications

1. Dispositif de traitement au moyen d'un dérivé halogéné d'une eau de bassin, notamment de piscine, le dispositif de traitement comportant des moyens de production (6) par électrolyse dudit dérivé halogéné à partir d'une solution aqueuse comportant un sel halogéné, et des moyens de mesure (3) de la concentration en dérivé halogéné dans le bassin, le dispositif de traitement étant **caractérisé en ce qu'**il comporte :
- des moyens de régulation (7) de la production du dérivé halogéné permettant de varier la vitesse et la durée de production du dérivé halogéné,
- des moyens de traitement (8) de données obtenues par les moyens de mesure permettant de commander aux moyens de régulation un profil de régulation des vitesses et durées de production du dérivé halogéné en fonction de sa concentration dans le bassin.

2. Dispositif de traitement selon la revendication 1, dans lequel les moyens de régulation (7) comportent des moyens de variation de la tension appliquée aux bornes d'un électrolyseur équipant les moyens de production (6).

3. Dispositif de traitement selon la revendication 2, dans lequel les moyens de régulation sont agencés pour permettre une variation de 0 à 20 ampères du courant aux bornes de l'électrolyseur.

4. Dispositif de traitement selon la revendication 1, dans lequel les moyens de traitement (8) comportent une mémoire (9) permettant le stockage d'au moins un profil de régulation pour différentes concentrations du dérivé halogéné, permettant la sélection d'un profil adapté aux données obtenues par les moyens de mesure (3).

5. Dispositif de traitement selon la revendication 4, dans lequel les moyens de traitement (8) permettent l'analyse et le stockage dans la mémoire (9) d'au moins un paramètre supplémentaire relatif à l'eau du bassin.

6. Dispositif de traitement selon la revendication 5, dans lequel ledit au moins un paramètre supplémentaire est l'évolution de la concentration en dérivé halogéné et/ou la température du bassin et/ou le volume d'eau du bassin et/ou le pH du bassin, permettant de constituer une grande variété de profils de régulation assurant une commande adaptée des moyens de régulation.

7. Dispositif de traitement selon la revendication 4, dans lequel les moyens de traitement (8) sont agencés pour enregistrer dans la mémoire (9) les données mesurées permettant la constitution de nouveaux profils de régulation.

8. Dispositif de traitement selon la revendication 4, dans lequel les profils de régulation comportent une phase d'accroissement de la vitesse de production par paliers suivie d'une phase d'accroissement de la durée de production.

9. Procédé de traitement au moyen de dérivés halogénés d'une eau de bassin, notamment de piscine, mettant en oeuvre un dispositif de traitement (1) selon l'une quelconque des revendications précédentes, et comportant :
- une étape de mesure de la concentration du dérivé halogéné,
- une étape de traitement permettant la commande d'un profil de régulation des vitesses et des durées de production du dérivé halogéné, et
- une étape de production du dérivé halogéné selon le profil commandé.

10. Procédé de traitement selon la revendication précédente, comportant au moins une étape de mesure supplémentaire et une étape de traitement permettant de conserver ou de modifier le profil de production du dérivé halogéné.
